# EUROPEAN PATENT APPLICATION

(11) **EP 4 362 198 A1**
(43) Date of publication of application: **01.05.2024**
(21) Application number: 22306637.4
(22) Date of filing: 28.10.2022
(51) Int. Cl.: H01M 50/403, H01M 50/417, H01M 50/44, H01M 50/454, H01M 50/449, H01M 50/463, H01M 50/494, H01M 6/04, H01M 10/24, H01M 10/28

(54) **A SEPARATOR TO BE INTERPOSED BETWEEN TWO ELECTRODES OF OPPOSITE POLARITIES IN AN ELECTROCHEMICAL CELL, ELECTROCHEMICAL CELL AND ASSOCIATED METHOD**

(71) Applicant: Saft Groupe, 92300 Levallois-Perret (FR)
(72) Inventor: DAHLBERG, Ronnie, 572 62 OSKARSHAMN (SE); JOSEFSSON, Simon, 414 57 GOTHENBURG (SE); KUMM, Henrik, 572 31 OSKARSHAMN (SE)
(74) Representative: Lavoix

(57) **Abstract**

The separator (17) comprises :
- a porous flat separating element made of a porous membrane or of a felt (34),
- at least a rib (44) stiffening the flat separating element.

The or each rib (44) is fixed to the flat separating element.

## Description

The present invention concerns a separator for electrochemical cell, to be interposed between two electrodes of opposite polarities in an electrochemical cell, comprising:
- a porous flat separating element made of a porous membrane or of a felt,
- at least a rib stiffening the flat separating element.

Batteries are essential for energy storage in many applications and systems. The integrity of a battery is an important condition to provide viable storage and delivery of electrical power.

Batteries generally comprise a plurality of electrochemical cells which comprise stacks of electrodes, also called plates, of opposed polarities separated with a separator. Low voltage cells and sometimes short circuits may however occur in a battery when the electrical separation between two electrodes of opposite polarities is defective.

Electrical separation can be provided by different technical solutions. One solution is to provide an open grid separator having rigid vertical ribs. Using a grid has the advantage of maintaining a predefined gap between the electrodes. However, connecting the ribs together require horizontal or inclined bars which collect sediments present in the electrolyte. Build-up of sediments on the bars between the electrodes may cause lower voltage cells and in critical cases, short circuits.

Another solution is to provide a felt as a separator between the electrodes. The felt is for example made of a non-woven. The felt prevents the passage of sediments and thus, the build-up of sediment bridges between the electrodes.

Nevertheless, when pressing the stack of electrodes and separators, the felt may be pressed too tightly, resulting in an undefined gap between the electrodes. The density of felt can thus vary among the separators in the battery. This can be an issue concerning the stability of the stack and regarding electrolyte penetration in the stack.

An intermediate solution is described in WO2020/037183. The document discloses a separator comprising a porous membrane having arrays of ribs which are integrally formed for example by moulding.

Manufacturing such assemblies with tight tolerances is tedious and expensive. Moreover, the material of the membrane must in some instances be quite flexible and elastic, which is contradictory with the stiffness required for defining a distance between the electrodes. This may lead to instances in which fixed distances between the electrodes and the separator cannot be maintained in use.

One aim of the invention is to provide an easy to manufacture separator, which allows a battery to reliably deliver high power, while limiting the risk of low voltage cells or short circuits.

To this aim, the subject matter of the invention is a separator for electrochemical cell of the aforementioned type, characterized in that the or each rib is fixed to the flat separating element.

The separator according to the invention may comprise one or more of the following feature(s), taken solely or according to any technical feasible combination:
- the or each rib is made of polymer, in particular of polypropylene;
- the thickness of the or each rib is less than 1.5 millimeters, advantageously between 0.5 millimeters and 1.2 millimeters;
- the separator comprises several parallel ribs, the distance between the adjacent ribs being between 10 millimeters and 30 millimeters, for example 20 millimeters;
- the ribs are totally apart from each another;
- the flat separating element is a felt made of unwoven or woven fibrous material;
- the flat separating element has a thickness of less than 0.5 millimeters, in particular between 0.1 millimeters and 0.5 millimeters;
- the or each rib is fixed on the flat separating element by extruding, gluing, welding, melting or 3D printing;
- the flat separating element and the or each rib fixed on the flat separating element are able to be jointly wound in a roll by hand force.
- the rib is made of a material different from the material of the flat separating element or/and the rib has a different shape or/and thickness than the flat separating element.

The invention also has as its subject matter an electrochemical cell comprising at least a plate pair, each plate pair having:
- a first electrode having a first polarity and a second electrode having a second polarity opposed to the first polarity;
- a separator as defined above;
   wherein the separator is interposed between the first electrode and the second electrode, the at least one rib being applied on one of the first electrode and of the second electrode.

The cell according to the invention may comprise one or more of the following feature(s), taken solely or according to any technical feasible combination:
- at least one of the first electrode and of the second electrode comprises assembled pockets;
- the cell contains an alkaline electrolyte.

Another subject matter of the invention is a method for manufacturing at least a separator of an electrochemical cell, comprising:
- providing a flat separating element made of a porous membrane or of a felt,
- fixing at least one stiffening rib to the flat separating element.

The method according to the invention may comprise one or more of the following feature(s), taken solely or according to any technical feasible combination:
- the or each rib is fixed on the flat separating element by extruding, gluing, welding, melting or 3D printing;
- providing the flat separating element comprises unrolling a roll of flat separating element and continuously fixing at least one rib to the unrolled flat separating element, optionally rolling and subsequently unrolling the flat separating element with the at least one rib fixed to it, the process comprising cutting the unrolled flat separating element having the at least one rib fixed to it to form at least a separator.

The invention also concerns an electrochemical cell assembly method, comprising:
- manufacturing separators using the above described manufacturing method;
- interposing the separators between successive electrodes of opposed polarities to form a stack of plate pairs;
- placing a holder to hold the stack of plate pairs.

The invention will be better understood, upon reading of the following description, given only as an example, and made in reference to the following figures in which:
- [Fig.1] figure 1 is a perspective view of a first battery cell according to the invention;
- [Fig.2] figure 2 is a perspective view of a first separator according to the invention;
- [Fig.3] figure 3 is a perspective view of a step of fixing ribs on a felt in a separator manufacturing method according to the invention;
- [Fig.4] figure 4 is a perspective view of a second separator according to the invention.

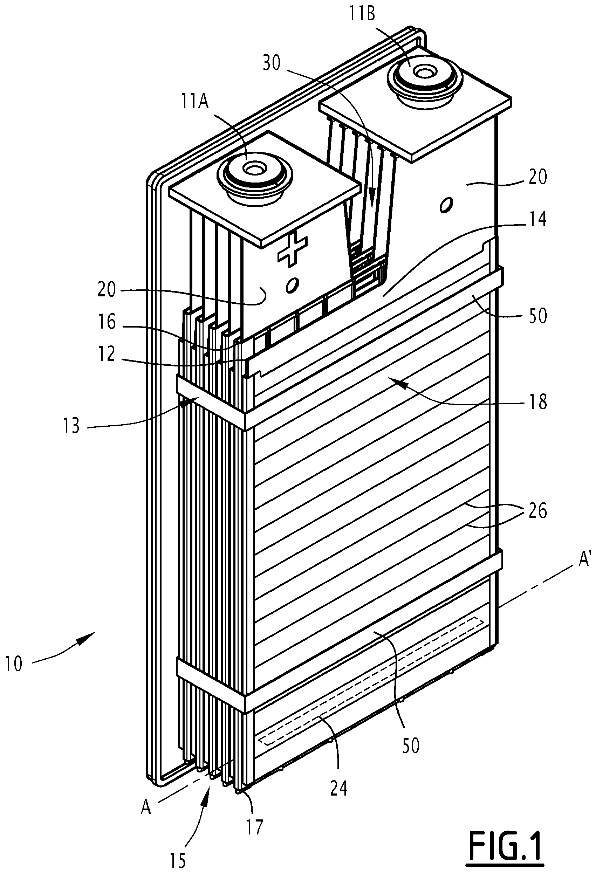

A separator according to the invention is intended to be used in an electrochemical cell 10, an example of which is partially represented in figure 1. A plurality of cells 10 are assembled to form a battery.

The cell 10 is for example intended to be connected via terminals 11A, 11B to at least an electrical component to power the electrical component, or to a source of electrical power to charge the battery.

The battery containing many cells 10 is for example mounted in a train, boat, hospital, oil rig, subway train station or other standby application.

The cell 10 comprises a plurality of plate pairs 12, which are stacked together. It possibly comprises at least a holder 13 to maintain the plate pairs 12 stacked together in a stack 15.

Each plate pair 12 comprise two electrodes 14, 16 of opposite polarities. It further comprises a separator 17 according to the invention, which separates the two electrodes 14, 16 in the plate pair 12. The separator 17 maintains a predefined distance between the electrodes 14, 16 and simultaneously avoids low voltage cells and short circuits. The electrodes can be of the pocket type.

As shown in figure 1, the two electrodes 14, 16 of opposite polarities are facing each other. The stack 15 of plate pairs 12 includes successive positive polarity electrodes 16 facing negative polarity electrodes 14.

As shown in figure 1, each electrode 14, 16 contains an electrode base 18 comprising active material and an electrical connection lug 20 protruding from the electrode base 18.

The electrical connection lugs 20 of the positive polarity electrodes 16 protrude facing each other in a first region of the stack 15 of plate pairs 12 (here on the left in figure 1) to be connected to a first terminal 11A. The electrical connection lugs 20 of the negative polarity electrodes 14 protrude facing each other in a second region of the stack 15 of plate pairs12, distinct from the first region (here at the right in figure 1) to be connected to a second terminal 11B.

The cell 10 is filled with electrolyte 30 in which the electrodes 14, 16 and the separator 17 are immersed. The electrolyte 30 allows the ionic conduction and electrochemical reactions at the electrodes 14, 16 within the cell 10.

The electrolyte is preferably an alkaline aqueous solution comprising at least one hydroxide (for example KOH, NaOH, LiOH).

Both electrodes 14, 16 comprise active material 24. The active material 24 of the negative polarity electrode 14 for example comprises cadmium. The active material of the positive polarity electrode 16 for example comprises nickel. More generally, the cell 10 is configured for having an alkaline electrolyte and can be a Ni/Cd, Ni/MH, Ni-Zn, Ni-Fe, Lead acid and Zn-ion type.

In the particular example of figure 1, each electrode 14, 16 comprises an assembly of several adjacent pockets 26 joined together to form an electrode base 18.

Each pocket 26 comprise two assembled C-shaped profiles having through apertures and a briquette of active material 24 positioned between the two profiles.

Both profiles are advantageously made of metal, for example steel.

The pockets 26 extends parallel to a common axis A-A', which can be vertical or horizontal.

The pockets 26 are arranged adjacent to each other. Adjacent pockets 26 are connected to one another along opposed side edges of the pockets 26, parallel to the common axis A-A', for example by a side flank.

The electrical connection lug 20 protrudes from an end pocket 26 of the electrode base 18.

The pockets 26 and the lug 20 thus form an electrode 14, 16 which is movable in one piece to be placed in the stack 15.

The separator 17 according to the invention is interposed between the negative polarity electrode 14 and the positive polarity electrode 16. It maintains a predetermined distance between the electrodes 14, 16, while avoiding the formation of bridges of solid particles between the electrodes 14, 16.

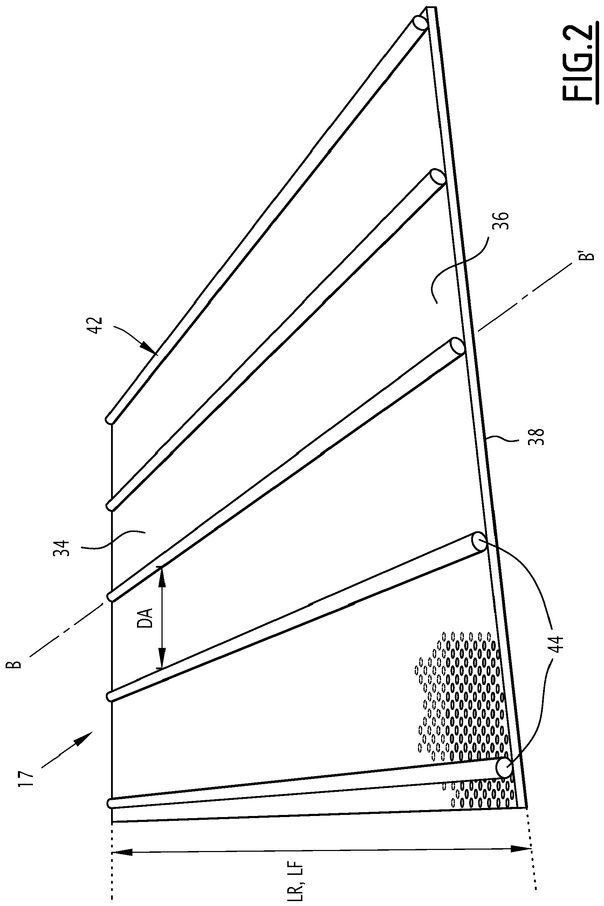

In the example of figure 2, the separator 17 comprises a flat separating element, here formed of a felt 34, and a grid 42 of stiffening ribs 44 fixed on the felt 34. The felt 34 and the grid 42 are jointly movable as a single piece.

The felt 34 is generally made of a flat piece of fibrous unwoven or woven material. A « felt » is understood, in the meaning of the present invention by a mixture of base fibers and of binder.

The fibers may be noble and/or recycled fibers, either natural or synthetic, of a single or several natures. Examples of natural fibers which may be used are flax, cotton, hemp, bamboo etc. Examples of synthetic fibers which may be used are glass fibers, Kevlar, polyamide, acrylic, polyester, polypropylene or acrylonitrile butadiene styrene (ABS).

The binder is for example a resin or binding fibers which have a melting point below that of the base fibers to be bound. Examples of resins are epoxy resins or phenolic resins. Examples of binding fibers are polypropylene, polyethylene, polyamide, polyester or two component polyesters.

In a particular example, the felt 34 is here made of fibers made of polypropylene assembled together with a binder usually made of polypropylene.

The felt 34 generally has a polygonal contour in particular a rectangular contour. It has a thickness of generally less than 1.0 millimeters, in particular between 0.1 millimeters and 0.5 millimeters.

This range of thickness is generally sufficient to prevent short circuits, while having a significant thickness between the electrodes 14, 16.

The surface mass of the felt 34 is advantageously less than 200 g/m², in particular comprised between 100 g/m² and 200 g/m².

The felt 34 is porous. Its porosity is for example greater than 20% and comprised between 40% and 80%.

The porosity of the felt 34 and the size of the pores is adapted to let liquids flow through the pores while retaining solids of a size advantageously greater than 0,4 mm.

The felt 34 has a first main face 36 intended to face one electrode 14, 16 and a second opposed main face 38 intended to face the other electrode 16, 14. The surface area of each main face 36, 38 of the felt 34 is preferably at least equal to the surface area of the electrode base 18 it faces.

The felt 34 lets the electrons and ions contained in the electrolyte 30 pass between the negative polarity electrode 14 and the positive polarity electrode 16. On the contrary, solid particles are blocked by the interface created by the felt 34. The particles may result from deterioration of active material 24 in the electrodes 14, 16 or from degradation of the electrolyte 30.

The grid 42 comprises ribs 44 attached to the felt 34.

In the example of figure 2, the ribs 44 are fixed to at least one of the main faces 36, 38 to protrude from the main face 36, 38. The ribs 44 thus apply onto the electrode 14, 16 facing the main face 36, 38 and thus define a distance between the main face 36, 38 and the electrode 14, 16.

In the example of figure 2, the ribs 44 all extend parallel to an axis B-B' of the felt 34, in particular along a vertical axis of the felt 34.

In this example the ribs 44 are disjoint and totally apart from each other. The grid 42 is devoid of transverse structure connecting the ribs 44.

The length LR of each rib 44, measured parallel to the axis B-B' is here equal to the length LF of the felt 34, as shown in figure 2.

The ribs 44 are here made of a material stiffer than the material of the felt 34, which stiffens the felt 34. The bending stiffness of the material forming the ribs 44 is larger by a factor of 3 or greater than the bending stiffness of the material of the felt 34.

Preferentially, the ribs 44 are made of plastic, in particular polyolefin such as polypropylene, acrylonitrile butadiene styrene (ABS) or polyethylene. In variant, the ribs 44 are made of other inorganic material.

The thickness of the ribs 44 is preferably less than 1.6 mm, advantageously between 1.0 mm and 1.4 mm.

The distance DA between adjacent ribs 44, taken perpendicularly to the axis B-B', is advantageously greater than 30 times the thickness of a rib 44.

The distance DA is for example between 15 millimeters and 50 millimeters, in particular 20 millimeters.

Thus, the ratio on the main face 36, 38 of the surface area occupied by ribs 44 to the total surface area of the main face 36, 38 is preferably smaller than 10%, in particular smaller than 6%, and is generally comprised between 1% and 5%.

Such a ratio optimizes the operation of the separator 17. The surface area occupied by the ribs 44 is small enough to limit interfering with the passage through the felt of ions present in the electrolyte 30. Also, the surface density of ribs 44 fixed to the felt 34 create a more rigid structure than the felt 34 itself, making sure the distance between the main face 36, 38 and the facing electrode 14, 16 is predefined, especially upon compression of the felt 34 between the electrodes 14, 16.

With reference to figure 2, the ribs 44 are fixed only on the first main face 36 of the felt 34.

The ribs 44 are assembled to the felt 34 by extruding, gluing, welding, melting or by additive methods such as 3D printing.

Advantageously, the felt 34 to which the ribs 44 are fixed is still flexible enough to be wound in a roll by hand force (generally less than 500N).

In reference to figure 1, the holder 13 comprises at least a belt 50 surrounding and pressing the electrodes 14, 16 and separators 17 within the stack 15 of plate pairs 12 at the periphery of the stack 15 of plate pairs 12.

In a variant, not shown, the holder 13 comprises end plate pairs connected by peripheral rods pressing the electrodes 14, 16 and separators 17.

A method of manufacturing the separator 17 shown in figure 2 will now be described.

First, a layer of flat separating element made of felt is provided. The layer of flat separating element is for example provided by unrolling a roll of flat separating element.

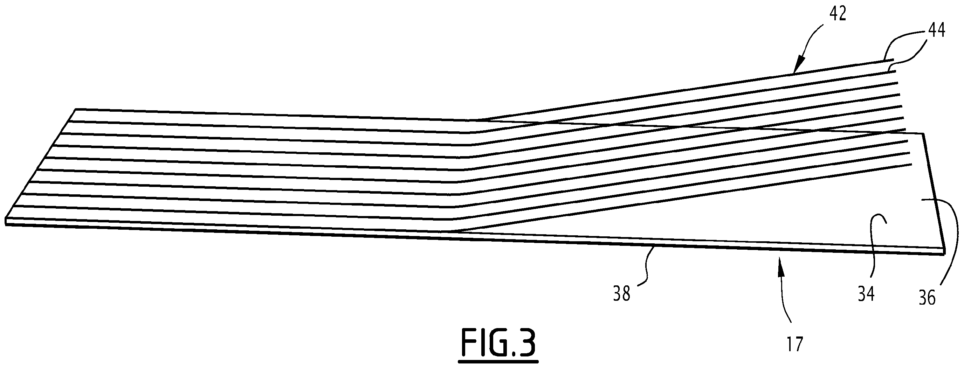

Then, as shown for example in figure 3, the ribs 44 are fixed on at least a main face 34, 36 of the porous material to form the grid 42, by at least one of the techniques described above. The formation of the ribs 44 is preferentially continuous, during or after unrolling the band of flat separating element.

Subsequently, separators 17 are formed by cutting the flat separating element onto which the ribs 44 have been fixed, to the required size.

The separators 17 are then interposed between successive electrodes 14, 16 of opposed polarities to form the stack 15 of plate pairs 12. The holder 13 is then put in place to compress the stack 15 and maintain it in place.

In a variant, after fixing the ribs 44 to the flat separating element as shown in figure 3, the flat separating element, having the ribs 44 fixed to it, is rolled again. It can then be transported to another station. It is subsequently unrolled to form the separators 17 by cutting them to the required size.

In a variant, not shown, ribs 44 are fixed on both the first and second main faces 36, 38 of the felt 34. Thus, ribs 44 protruding from the first main face 36 contact the negative polarity electrode 14 and ribs 44 protruding from the second main face 38 contact the positive polarity electrode 16 after forming the stack 15 of plate pairs 12.

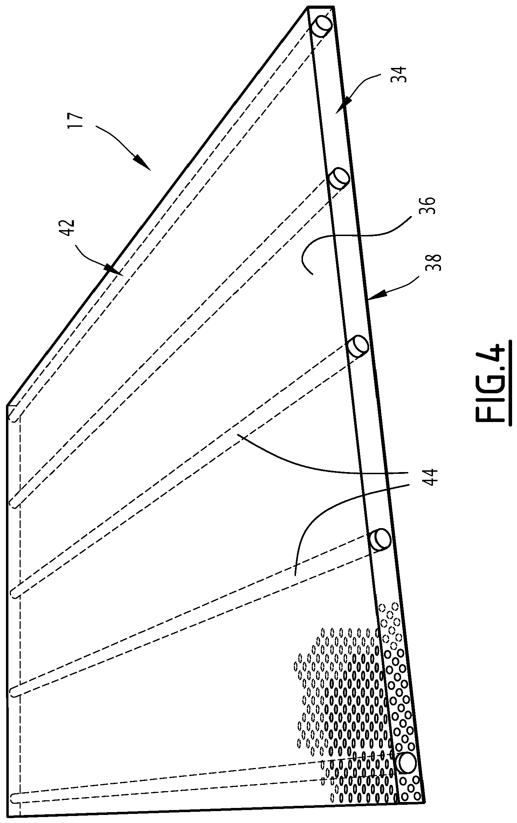

Figure 4 shows another embodiment according to the invention in which the ribs 44 are not added on the main surface of the felt 34, but are embedded within the felt 34. This can be done for example by sandwiching the ribs 44 between two layers of felt.

In another variant of the embodiments of figures 1 to 4, not shown, the flat separating element is a porous membrane and not a felt. The membrane is for example formed of polymer, in particular polypropylene.

The thickness of the membrane is for example less than 0,5 mm and comprised between 20 µm and ½ of thickness of a rib 44.

The number average pore size is for example smaller than 4 mm and comprised between 5 µm and 100 µm.

Just as for the felt 34, the ribs 44 are fixed to the membrane by the above described methods. The ribs 44 stiffen the membrane.

Thanks to the separators 17 according to the invention the risk of appearance of low voltage cells is lowered. The flat porous separating element of the separator 17 prevents particles or sediment to build up a short-circuit.

The separators 17 according to the invention also comprising rigid ribs 44 having a constant thickness. The ribs 44 act as a hard stop defining a distance between the electrodes 14, 16. The material of the flat separating element, in particular felt, is not compressed beyond a defined limit. Since the felt is not fully compressed, electrolyte can still reach the active material and wet all of the plate pair 12.

Additionally, separators 17 according to the invention provide a substantially constant felt thickness, and hence are less sensitive for variations in the density of the felt.

In addition, the separator 17 manufacturing process is adaptive and can be easily automated thanks to the use of rolls or sheets of flat separating element onto which or in which the ribs 44 of the grid 42 are formed.

As opposed to known grid separators, no horizontal bars connect the ribs 44 which prevents the collection of solid particles.

Moreover, the separator 17 can adapt to various types of electrodes including the electrodes which are used for cells currently having felt separators or grid separators.

## Claims

1. A separator (17) for electrochemical cell, to be interposed between two electrodes (14, 16) of opposite polarities in an electrochemical cell (10), comprising:
- a porous flat separating element made of a porous membrane or of a felt (34),
- at least a rib (44) stiffening the flat separating element;
**characterized in that** the or each rib (44) is fixed to the flat separating element.

2. The separator (17) according to claim 1, wherein the or each rib (44) is made of polymer, in particular of polypropylene.

3. The separator (17) according to claim 1 or 2, wherein the thickness of the or each rib (44) is less than 1.5 millimeters, advantageously between 0.5 millimeters and 1.2 millimeters.

4. The separator (17) according to any one of the preceding claims, comprising several parallel ribs (44), the distance between the adjacent ribs (44) being between 10 millimeters and 30 millimeters, for example 20 millimeters.

5. The separator (17) according to claim 4, wherein the ribs (44) are totally apart from each another.

6. The separator (17) according to any one of the preceding claims, wherein the flat separating element is a felt (34) made of unwoven or woven fibrous material.

7. The separator (17) according to any one of the preceding claims, wherein the flat separating element has a thickness of less than 0.5 millimeters, in particular between 0.1 millimeters and 0.5 millimeters.

8. The separator (17) according to any one of the preceding claims, wherein the or each rib (44) is fixed on the flat separating element by extruding, gluing, welding, melting or 3D printing.

9. The separator (17) according to any one of the preceding claims, wherein the flat separating element and the or each rib (44) fixed on the flat separating element are able to be jointly wound in a roll by hand force.

10. An electrochemical cell (10) comprising at least a plate pair (12), each plate pair (12) having:
- a first electrode (14) having a first polarity and a second electrode (16) having a second polarity opposed to the first polarity;
- a separator (17) according to any one of the preceding claims;
wherein the separator (17) is interposed between the first electrode (14) and the second electrode (16), the at least one rib (44) being applied on one of the first electrode (14) and of the second electrode (16).

11. The cell (10) according to claim 10, wherein at least one of the first electrode and of the second electrode comprises assembled pockets (26).

12. The cell (10) according to claim 10 or 11, containing an alkaline electrolyte.

13. A method for manufacturing at least a separator (17) of an electrochemical cell (10), comprising:
- providing a flat separating element made of a porous membrane or of a felt (34),
- fixing at least one stiffening rib (44) to the flat separating element.

14. The method according to claim 13, wherein the or each rib (44) is fixed on the flat separating element by extruding, gluing, welding, melting or 3D printing.

15. The method according to claim 13 or 14, wherein providing the flat separating element comprises unrolling a roll of flat separating element and continuously fixing at least one rib (44) to the unrolled flat separating element, optionally rolling and subsequently unrolling the flat separating element with the at least one rib (44) fixed to it, the process comprising cutting the unrolled flat separating element having the at least one rib (44) fixed to it to form at least a separator (17).
